# EUROPÄISCHE PATENTSCHRIFT

(11) **EP 4 371 757 B1**
(45) Veröffentlichungstag und Bekanntmachung des Hinweises auf die Patenterteilung: **05.11.2025**
(21) Anmeldenummer: 22207508.7
(22) Anmeldetag: 15.11.2022
(51) Int. Cl.: B32B 3/06, B32B 7/12, B32B 9/00, B32B 9/04, B32B 15/08, B32B 15/20, B32B 27/06, B32B 5/02, B32B 13/12, B32B 17/10, B32B 21/08, B32B 27/40

(54) **FORMTEIL MIT ERHÖHTER STABILITÄT DURCH ALUMINIUMTEILCHEN EINES BEGRENZTEN GEWICHTS ZUR HERSTELLUNG VON MÖBELSTÜCKEN UND VERFAHREN ZU DESSEN HERSTELLUNG UND VERWENDUNG**
MOULDING WITH INCREASED STABILITY BY ALUMINIUM PARTICLES OF LIMITED WEIGHT FOR THE MANUFACTURE OF FURNITURE AND METHOD FOR ITS MANUFACTURE AND USE
PIÈCE MOULÉE À STABILITÉ AMÉLIORÉE PAR DES PARTICULES D'ALUMINIUM DE POIDS LIMITÉ POUR LA FABRICATION DE MEUBLES ET PROCÉDÉ DE FABRICATION ET D'UTILISATION DE CELLE-CI

(43) Veröffentlichungstag der Anmeldung: 22.05.2024
(73) Patentinhaber: puren GmbH, 88662 Überlingen (DE)
(72) Erfinder: Kara, Maximilian, 63739 Aschaffenburg (DE); Krauss, Martin, 64750 Lützelbach (DE); Schöhl, Andreas, 63820 Elsenfeld (DE)
(74) Vertreter: Daub, Thomas

(56) Entgegenhaltungen:
- CN-A- 112 549 704
- DE-A1- 10 228 473
- DE-U1- 202016 106 033
- US-A1- 2014 004 355

## Beschreibung

Die Erfindung betrifft ein Formteil aus einem Polyurethanstück und zwei Außenschichten, welches aufgrund seines Aufbaus zur Herstellung von Möbelstücken geeignet ist und aufgrund der Zusammensetzung des Polyurethanstücks und seiner Herstellung durch Aluminiumteilchen eines begrenzten Gewichts eine erhöhte Stabilität gegenüber den herkömmlichen Formteilen aus dem Stand der Technik, die bei der Herstellung von Möbelstücken genutzt werden, aufweist. Die Erfindung betrifft auch ein Verfahren zur Herstellung des Formteils und die Verwendung des Formteils zur Herstellung von Möbelstücken und die daraus hergestellten Möbelstücke.

Möbelstücke sind in der Menschheitsgeschichte schon seit Langem bekannt und können aus vielerlei Werkstoffen hergestellt werden. Als sehr geeignet für Möbelstücke hat sich Aluminium erwiesen, weil dieses ein geringes spezifisches Gewicht und eine gute mechanische Stabilität aufweist. Dadurch können Möbelstücke hergestellt werden, die leicht tragbar und auch haltbar und belastbar sind. Zudem ist Aluminium beständig in Luft und kann so behandelt werden, dass es eine glänzende und visuell ansprechende Oberfläche aufweist. Das Aluminium wird dabei meist in Form von Rohren oder Röhren bereitgestellt, aus denen ihrerseits die tragenden Rahmen der Möbelstücke hergestellt werden. Auch Wände oder Wandstücke können je nach gewünschter Konstruktion des Möbelstückes aus Aluminium, bespielsweise in Form von Platten, hergestellt werden. Prinzipiell sind jedoch alle Werkstoffe zur Herstellung von Möbelstücken geeignet, wobei solche Werkstoffe, die ein geringes spezifisches Gewicht und eine gute mechanische Stabilität aufweisen, bevorzugt sind.

Bei der Herstellung der Möbelstücke ergibt sich das Problem, dass die für die Herstellung des Möbelstücks vorgesehenen Teile gegeneinander befestigt werden müssen. Bei der gegenseitigen Befestigung der Teile werden sehr oft Schraubverbindungen angewandt. Diese haben den Vorteil, wieder lösbar zu sein und können außerdem für den gewünschten Zweck bereitgestellt werden, indem diese beispielsweise je nach gewünschter Befestigungsstärke eine bestimmte Schraubtiefe aufweisen. Die Aluminiumstruktur ist jedoch oftmals für Schraubgewinde weniger geeignet, weil diese keine ausreichende Dicke aufweist und viele Werkstoffteile, die zur Herstellung von Möbelstücken vorgesehen sind, hohl sind. Aus diesem Grund wurden im Stand der Technik Lösungen vorgeschlagen, die den inneren Hohlraum der zur Herstellung von Möbelstücken vorgesehenen Werkstoffteile mit Füllstoffen versehen, die das Gewicht von Möbelstücken nur unwesentlich ansteigen lassen, die Hohlräume jedoch zur verbesserten mechanischen Festigkeit mit Feststoff ausfüllen.

Das Dokument CN102242560A beschreibt ein mattiertes Verbundmaterial aus einem Aluminium-Plastik-Verbundmaterial, welches aufeinanderfolgend aus einer mattierten Aluminiumplatte, einem ersten Polymerbindefilm, einer Polyurethan-Innenschicht, einem Polymerklebefilm und einer weiteren Aluminiumplatte mit insgesamt fünf Schichten besteht. Dieses auf einer Seite mattierte Verbundmaterial wird insbesondere zur Herstellung von Möbelstücken gehobener Qualität bespielsweise in Innenräumen und Automobilen verwendet. Das Dokument gibt keinerlei Hinweise zur Konstruktion der Möbelstücke selbst und auch nicht zur mechanischen Festigkeit des beschriebenen Verbundmaterials.

Das Dokument EP2796258A2 beschreibt einen zweidimensionalen elektrischen Oberflächenleiter mit einer Isolierschicht, welcher eine 5 mm dicke Schicht aus Polyurethanschaum, zwei elektrisch leitende Aluminiumfolien, zwei Schichten aus einem 5 mm dicken Naturkorkagglomerat, außerdem LED-Leuchtdioden mit Elektroden verschiedener Länge, die an ihrem Ende eine Epoxid-Lackschicht zur Isolation aufweisen, und eine Stromquelle umfasst. Der Oberflächenleiter bietet durch die Korkschicht eine isolierende und gleichzeitig mechanisch flexible Innenschicht zum Einbau von elektrischen Komponenten zur Herstellung eines elektrischen Bauteils mit einer elektrisch leitenden Oberfläche. Das Dokument erwähnt auch die mögliche Herstellung von Möbelstücken aus dem zweidimensionalen elektrischen Oberflächenleiter. Das Dokument gibt ebenfalls keinerlei Hinweise zur Konstruktion der Möbelstücke selbst und auch nicht zur mechanischen Festigkeit des beschriebenen zweidimensionalen elektrischen Oberflächenleiters.

Das Dokument DE202016106033U1 beschreibt eine Platte mit einem Kern aus einem extrudierten Hartschaumstoff, welche an wenigstens einer Oberflächenseite mit einer Deckschicht aus einem Hochdruckschichtpressstoff (HPL) versehen ist, wobei die Platte an den Stirnseiten zur Kantenabdeckung eine Schicht aus einem witterungsbeständigen Kunststoff aufweist. In einer Ausführungsform der beschriebenen Erfindung besteht der Kern der Platte aus einem geschlossenzelligen extrudierten Polystyrol (XPS), und die stirnseitige Schicht für die Kantenabdeckung aus einem thermoplastischen Kunststoff. Die beschriebene Platte eignet sich beispielweise für Tischplatten von Gartenmöbeln oder Tische für die Außengastronomie oder andere Möbel, die dauerhaft im Freien stehen, wie zum Beispiel Möbel im öffentlichen Bereich.

Es wird deshalb nach Werkstoffen für die Herstellung von Möbelstücken gesucht, die aus zwei Außenschichten als strukturgebendem Bestandteil aufgebaut sind und die in ihrem Inneren einen Füllstoff aufweisen, der eine genügende mechanische Festigkeit und Tiefe besitzt zur Befestigung von verbindenden Befestigungsmitteln. Diese verbindenden Befestigungsmittel sind typischerweise Schrauben. Der Werkstoff sollte auch keine Einschränkungen bezüglich der visuellen Erscheinungsform der Oberfläche gegenüber einer Aluminiumoberfläche aus dem Stand der Technik bieten und ein geringes spezifisches Gewicht zur leichten Tragbarkeit der Möbelstücke aufweisen. Der Werkstoff sollte als Formteil und idealerweise in Form von Platten vorliegen, die dann zu den gewünschten Möbelstücken zusammengebaut werden können.

Es besteht deshalb die Aufgabe, Formteile mit zwei Außenschichten als strukturgebendem Bestandteil bereitzustellen, die zur Herstellung von Möbelstücken geeignet sind, und die gegenüber den Formteilen aus dem Stand der Technik eine erhöhte mechanische Stabilität aufweisen. Es besteht auch die Aufgabe, ein Verfahren zur Herstellung dieser Formteile bereitzustellen.

Die vorliegende Erfindung löst diese Aufgabe durch ein Formteil, welches zur Herstellung von Möbelstücken geeignet ist, und welches in einer geradlinigen Durchsicht aus einer Innenschicht, welche aus einem Polyurethanstück einer Dichte von 400 - 700 kg/m³, bestehend aus gehäckselten und verpressten Polyurethanmaterialschnipseln gemischt mit Aluminiumteilchen, besteht, und welches zwei Außenschichten aufweist, wobei die Außenschichten eine Dicke von 0,10 mm bis 4,00 mm aufweisen, die Aluminiumteilchen ein Gewicht von 0,0005 bis 2,00 g aufweisen, und die Klebeschicht eine Auftragsmenge von 40 bis 600 g/m² besitzt.

Beansprucht wird ein Formteil zur Herstellung von Möbeln, umfassend
- eine Innenschicht, bestehend aus einem Polyurethanstück, und
- zwei Außenschichten, und
- zwischen den Außenschichten und der Innenschicht jeweils eine Klebeschicht, mit einer weiteren Klebeschicht auf der anderen Seite des Polyurethanstücks,
und welches dadurch gekennzeichnet ist, dass
- das Polyurethanstück der Innenschicht aus gehäckselten und verpressten Polyurethanmaterialschnipseln gemischt mit Aluminiumteilchen und einem Bindemittel besteht und eine Dichte von 400 - 700 kg/m³ besitzt, und
- die Außenschichten eine Schichtdicke von 0,10 - 4,00 mm aufweisen, und
- die Aluminiumteilchen ein Gewicht von 0,0005 bis 2,00 g aufweisen, und
- die Klebeschichten eine Auftragsmenge von 40 bis 600 g/m² besitzen.

Die Bezeichnungen der einzelnen Schichten beziehen sich dabei auf eine geradlinige Durchsicht durch das Formteil. Bei einer Plattenform des Formteils werden auf die Innenschicht zwei Außenschichten aufgebracht. Ist das Formteil ein Rohr oder eine Röhre, ist die Anzahl der beiden Außenschichten bei einer geradlinigen Durchsicht durch das Rohr oder die Röhre gegeben. Für ein Rohr oder eine Röhre bilden die beiden Außenschichten dann eine radiale Außenschicht.

Die Aluminiumteilchen weisen erfindungsgemäß ein begrenztes Gewicht von 0,0005 bis 2,00 g auf. Durch dieses Gewicht der Aluminiumteilchen wird eine optimale mechanische Festigkeit des Polyurethanstücks erreicht. Die Aluminiumteilchen können in einer Ausführungsform auch ein Gewicht von 0,001 bis 0,5 g aufweisen. Die Aluminiumteilchen können beispielsweise Aluminiumschnipsel sein. In einer beispielhaften Ausführungsform sind die Aluminiumteilchen Aluminiumschnipsel eines Gewichts von 0,001 bis 0,5 g. In einer weiteren Ausführungsform sind die Aluminiumteilchen Aluminiumschnipsel eines Gewichts von 0,01 bis 0,2 g.

Die Außenschicht sollte für die Ausführung der Erfindung eine Schichtdicke von 0,10 mm bis 4,00 mm aufweisen. In einer Ausführungsform der Erfindung weist die Außenschicht eine Schichtdicke von 0,80 mm bis 2,00 mm auf. Diese Schichtdicken haben sich als optimal sowohl für die Herstellung der Möbel als auch für die dabei erhaltene Stabilität der Möbel und deren spezifisches Gewicht erwiesen.

Für die Klebeschicht hat sich erfindungsgemäß eine Auftragsmenge von 40 bis 600 g/m² als besonders vorteilhaft herausgestellt. Dadurch wird ein optimales Verhältnis von Klebefestigkeit und Gewicht erzielt. Dadurch wird das Verhältnis von Klebefestigkeit und Gewicht weiter optimiert. Es kann auch ein enger gefasster Bereich verwendet werden von beispielsweise 80 bis 160 g/m². Dieser enger gefasste Bereich ist für die verwendeten Materialien sehr materialschonend. Durch die definierte Auftragsmenge muss die Klebeschicht nicht mehr mit einem Epoxid-Haftgrund versehen werden. Ein Epoxid-Haftgrund ist nur dann empfehlenswert, wenn eine Aluminiumplatte als Außenschicht und ein 1K-PUR-Prepolymer als Klebeschicht gewählt wird.

Das Häckseln und Verpressen von Polyurethanmaterialschnipseln ist im Stand der Technik bekannt und wird beschrieben beispielsweise in dem Dokument DE10228473A1. Als Bindemittel für die gehäckselten und verpressten Polyurethanmaterialschnipseln und die Aluminiumteilchen eignen sich Bindemittel, wie sie beispielsweise in dem Dokument US3717597A beschrieben sind. Ein Epoxid-Haftgrund wird beschrieben beispielsweise in dem Dokument DE3042788A1.

Die Außenschicht des Formteils besteht in einer bevorzugten und praktikablen Ausführungsform des Formteils aus Aluminium. Dieses Material hat ein geringes spezifisches Gewicht und ist beständig und haltbar. Auch gegenüber Witterungseinflüssen ist Aluminium unempfindlich. Außerdem kann dieses in einer visuell ansprechenden äußeren Form bereitgestellt werden. Die Außenschicht besitzt dieselbe Formgebung wie das Formteil und besteht in einer gängigen Ausführungsform aus Aluminium. Ist die Formgebung der Außenschicht eine Platte und besteht diese aus Aluminium, so bildet die Außenschicht aus Aluminium eine Aluminiumplatte.

In einer weiteren Ausführungsform des Formteils besteht die Außenschicht aus einem Steinfurnier. Dieses Steinfurnier besitzt wie Aluminium ein geringes spezifisches Gewicht und eine äußerlich ästhetische Wirkung. Das Steinfurnier ist preiswert in der Herstellung.

In einer weiteren Ausführungsform des Formteils wird das Material, aus dem die Außenschicht besteht, ausgewählt aus hochdruckgepresstem Laminat, kontinuierlich gepresstem Laminat, Carbonfaser, durch Harz gebundene Textilien, Beton, mineralisch gebundenen Materialien, keramischen Materialien, Gläsern, Metallen, witterungsbeständigen Kunststoffen oder Edelhölzern. Diese Materialien stellen weitere Ausführungsformen der Außenschicht dar, die sich je nach der Verwendung und dem Wunsch des Endproduktnutzers in der äußeren Erscheinungsform der Außenschicht unterscheiden. Diese Materialien besitzen ebenfalls ein relativ geringes spezifisches Gewicht und eine gute Haltbarkeit.

Die Metalle, aus denen die Außenschicht ebenfalls gebildet werden kann, sind beispielsweise Messing, Zink oder Kupfer. Diese Metalle besitzen im Vergleich zu Aluminium ein etwas höheres spezifisches Gewicht, sind jedoch auch beständig und haltbar. Diese Metalle besitzen zudem ein anderes äußeres Erscheinungsbild als Aluminium, so dass man je nach der Verwendung des Endprodukts auch anderen Wünschen des Endproduktnutzers bezüglich dem äußeren Erscheinungsbild des Endprodukts entgegenkommen kann.

Die witterungsbeständigen Kunststoffe sind beispielsweise Polymethylenmethacrylat (PMMA), Polyvinylchlorid (PVC), Polyethen (PE) oder Polyurethan (PU). Diese Kunststoffe sind preiswert und leicht handhabbar. Bei den Edelhölzern handelt es sich beispielsweise um Teak oder Mahagoni. Diese Edelhölzer besitzen eine äußerlich ästhetische Wirkung und sind im Vergleich zu anderen Hölzern auch relativ witterungsbeständig.

Alle genannten Materialien für die Außenschicht können miteinander kombiniert werden, je nach Wunsch des Nutzers des Endprodukts und je nach der gewünschten Erscheinungsform.

Die Klebeschicht besteht in einer beispielhaften Ausführungsform aus einem 1K-PUR-Prepolymer. Dieser Klebstoff härtet schnell aus und verbindet die zu verklebenden Teile zuverlässig und dauerhaft. Eine Klebeschicht aus einem 1K-PUR-Prepolymer wird beschrieben beispielsweise in dem Dokument WO2017121540A1.

In einer weiteren Ausführungsform des Formteils besteht die Klebeschicht aus einem Acrylatkleber, einem im Ausgangszustand lösungsmittelhaltigen Klebstoff, einem Dispersionsklebstoff, oder aus einem Zweikomponenten-Klebstoff. Diese Klebstoffe sind etwas preiswerter als das 1K-PUR-Prepolymer und lassen sich gut für die Verbindung der zu verklebenden Teile nutzen.

In der gängigsten Ausführungsform der Erfindung ist das Formteil planar und weist die Form einer Platte auf. Eine Platte lässt sich gut zum Bau von Möbelstücken verwenden. Diese wird in einer einfachen Ausführungsform zum Aufbau einer Abstellfläche rechtwinklig mit einer anderen Platte verschraubt. Es ist jedoch im Rahmen der Erfindung auch möglich, ein Formteil herzustellen, welches keine Platte darstellt. In einer beispielhaften Ausführungsform können auch Rohre oder Röhren als Formteil der vorliegenden Erfindung hergestellt werden. Prinzipiell kann für das Formteil der vorliegenden Erfindung jede beliebige geometrisch mögliche Form gewählt werden.

In einer weiteren vorteilhaften Ausführungsform der vorliegenden Erfindung weist das Polyurethanstück der Innenschicht eine Dichte von 550 - 660 kg/m³ auf. Diese Dichte hat sich als optimal herausgestellt, um die damit gebauten Möbel einerseits weiterhin von geringem Gewicht halten zu lassen und andererseits eine genügende mechanische Stabilität zur Verschraubung zu erreichen.

In einer weiteren Ausführungsform der Erfindung ist die Außenschicht mit einer Polyester-Lackierung mit einer Schichtdicke von 10 - 25 µm als äußerster Schicht lackiert, welche die äußerste Schicht des Formteils bildet und die Außenschicht abdeckt. Diese Schichtdicke hat sich als optimal herausgestellt, um die Oberfläche der Außenschicht zu schützen und eine Oberfläche zu schaffen, die einen angenehmen Griff beim Anfassen aufweist und visuell ansprechend ist. Diese Polyesterschicht wird in der Regel auf alle Aluminiumplatten des Formteils als äußerste Schicht aufgebracht. Es ist jedoch im Rahmen der Erfindung auch möglich, die Polyesterschicht nur auf einer Aluminiumplatte aufzubringen, bevorzugt dann auf der Aluminiumplatte, die später die Außenseite eines Möbelstücks bildet. Die Aufbringung einer Polyesterschicht auf die Außenschicht ist besonders bevorzugt, wenn die Außenschicht aus Aluminium gefertigt ist.

Beansprucht wird auch ein Verfahren zur Herstellung des oder der oben beschriebenen Formteile. Beansprucht wird ein Verfahren, umfassend die Verfahrensschritte
- Häckseln eines Polyurethanschaums in einem Häcksler zu Polyurethanschnipseln, und
- Beigabe eines Bindemittels zu den Polyurethanschnipseln und Vermischen, so dass sich ein Gemisch bildet, und Verpressen des dabei erhaltenen Gemisches zu einem Polyurethanstück, und
- Aufbringen einer Klebeschicht auf mindestens eine Seite des Polyurethanstücks, mit einer weiteren Klebeschicht auf der anderen Seite des Polyurethanstücks, und
- Aufpressen von Außenschichten auf die Seite des Polyurethanstücks, auf der die Klebeschichten aufgebracht sind,
und welches dadurch gekennzeichnet ist, dass
- zu den Polyurethanschnipseln vor dem Verpressen Aluminiumteilchen eines Gewichts von 0,0005 bis 2,00 g zugegeben werden, und
- das Verpressen zu einem Polyurethanstück mit einem solchen Druck und einer solchen Dauer vorgenommen wird, dass das Polyurethanstück nach dem Verpressen eine Dichte von 400 - 700 kg/m³ besitzt, und
- beim Auftragen der Klebeschichten eine Auftragsmenge von 40 bis 600 g/m² gewählt wird.

In der gängigsten Ausführungsform wird das Verfahren dazu genutzt, mehrere Formteile herzustellen, die dann zu einem Möbelstück zusammengesetzt werden. Es ist jedoch im Rahmen der Erfindung prinzipiell möglich, beliebig viele Formteile der Erfindung oder auch nur ein Formteil der Erfindung herzustellen. Auf die Außenseite der Außenschicht, die nicht mit der Klebeschicht in Berührung kommt, kann im Rahmen der Erfindung noch eine Polyesterschicht der Dicke 10-25 µm aufgebracht werden. Das Aufbringen einer Polyesterschicht auf die Außenschicht wird besonders bevorzugt, wenn die Außenschicht aus Aluminium gefertigt ist.

In einer Ausführungsform der Erfindung wird das Verpressen zu einem Polyurethanstück mit einem solchen Druck und einer solchen Dauer vorgenommen, dass das Polyurethanstück nach dem Verpressen eine Dichte von 550 - 660 kg/m³ besitzt. Durch den Druck und die Dauer des Verpressens lässt sich die Dichte des Polyurethanstücks gut steuern.

In einer weiteren Ausführungsform des Verfahrens zur Herstellung des oder der oben beschriebenen Formteile wird als Außenschicht eine Aluminiumschicht aufgepresst. Dieses Material hat ein geringes spezifisches Gewicht und ist beständig und haltbar. Auch gegenüber Witterungseinflüssen ist Aluminium unempfindlich. Außerdem kann es so aufgepresst werden, dass es eine visuell ansprechende äußere Form aufweist. Die Aluminiumschicht als Außenschicht kann dann eine Aluminiumplatte bilden.

In einer weiteren Ausführungsform des Verfahrens wird als Außenschicht ein Steinfurnier aufgepresst. Das Steinfurnier wird bevorzugt vor dem Aufpressen hergestellt. Das Steinfurnier kann hergestellt werden durch Auftragen eines Harzes auf Steinmaterial, Auftragen von Glasfasern auf das aufgetragene Harz und Abtragen der Glasfasern von Hand. Die abgetragenen Glasfasern mit dem Steinmaterial werden dann als Steinfurnier auf die Seite des Polyurethanstücks, auf der die Klebeschicht aufgebracht ist, aufgepresst. Die Herstellung des Steinfurniers ist einfach und preiswert.

Zum Aufpressen als Außenschicht kann das Material, aus dem die Außenschicht besteht, ausgewählt werden aus hochdruckgepresstem Laminat, kontinuierlich gepresstem Laminat, Carbonfaser, durch Harz gebundene Textilien, Beton, mineralisch gebundenen Materialien, keramischen Materialien, Gläsern, Metallen, witterungsbeständigen Kunststoffen oder Edelhölzern. Die Verarbeitung solcher Materialien zum Aufpressen als Außenschicht ist im Stand der Technik bekannt.

Wird zur Herstellung eines Formteils hochdruckgepresstes Laminat oder kontinuierlich gepresstes Laminat verwendet, so wird dieses zunächst in einem separaten Verfahrensschritt hergestellt. Hierzu werden mindestens zwei Papierschichten mit Melamin- oder Phenolharz eingetränkt, wodurch aus dem Melamin- oder Phenolharz nach dem Aushärten ein duroplastischer Kunststoff entsteht. Dieser duroplastische Kunststoff wird dann auf die Seite des Polyurethanstücks, auf der die Klebeschicht aufgebracht ist, als Außenschicht aufgepresst.

In einer weiteren Ausführungsform des Verfahrens handelt es sich bei den Metallen, die als Außenschicht aufgepresst werden, um Messing, Zink oder Kupfer. In einer weiteren Ausführungsform des Verfahrens handelt es sich bei den witterungsbeständigen Kunststoffen, die als Außenschicht aufgepresst werden, um Polymethylenmethacrylat, Polyvinylchlorid, Polyethen oder Polyurethan. In einer weiteren Ausführungsform des Verfahrens handelt es sich bei den Edelhölzern, die als Außenschicht aufgepresst werden, um Teak oder Mahagoni.

Als Klebeschicht kann eine Klebeschicht aus einem 1K-PUR-Prepolymer auf mindestens eine Seite des Polyurethanstücks aufgebracht werden. Dieser Klebstoff härtet schnell aus und verbindet die zu verklebenden Teile dauerhaft. Als Klebeschicht kann auch ein Acrylatkleber, ein im Ausgangszustand lösungsmittelhaltiger Klebstoff, welchen man zum Erhalt der Klebewirkung eintrocknen lässt, ein Dispersionsklebstoff, oder ein Zweikomponenten-Klebstoff auf die mindestens eine Seite des Polyurethanstücks aufgetragen werden. Bei einem im Ausgangszustand lösungsmittelhaltigen Klebstoff muss man das Lösungsmittel zunächst verdunsten lassen, um die gewünschte Klebewirkung zu erhalten. Lösungsmittelhaltige Klebstoffe sind dafür etwas preiswerter in der Anschaffung und leichter zu handhaben.

Die genannten Klebstoffe können auch in Kombination verwendet werden.

In einer Ausführungsform der Herstellung des oben beschriebenen Formteils zur Herstellung von Möbelstücken wird die Herstellung des Möbelstücks durch Einfräsen eines Hohlraumes in das Formteil und Verschrauben von mindestens zwei Formteilen zu einem Möbelstück vorgenommen. Die oben beschriebenen Formteile sind hierzu ideal geeignet. Der eingefräste Hohlraum kann ein Befestigungsmuster enthalten. Das Befestigungsmuster kann hierzu in den eingefrästen Hohlraum eingefräst werden. Der eingefräste Hohlraum ist in einer einfachen Ausführungsform ein eingefräster Zylinder und das Befestigungsmuster ein Schraubgewinde. Die Befestigung erfolgt dann durch ein Befestigungsteil. Das Befestigungsteil ist in einer einfachen Ausführungsform eine Schraube. Der eingefräste Hohlraum und das Befestigungsmuster weisen eine erhöhte Stabilität auf und bieten dem Befestigungsmuster bei Belastung durch Befestigungsteile eine erhöhte Stabilität, so dass diese nicht ausreißen und eine stabile Verbindung der Formteile zu einem Möbelstück ermöglichen.

Beansprucht wird auch die Verwendung eines oben beschriebenen Formteils zur Herstellung von Möbelstücken. Obwohl die Herstellung von Möbelstücken eine bevorzugte Verwendung der oben beschriebenen Formteile darstellt, ist es prinzipell möglich, die Formteile zu jedem Zweck zu verwenden, für den diese sich eignen.

Bei der Herstellung von Möbelstücken können auch Formteile verwendet werden, die als Platten geartet sind und planar sind. Dabei können sich offene Seitenflächen auftun, die nicht mit der Außenschicht bedeckt sind. Diese offenen Seitenflächen können nachträglich mit einer Abdeckungsplatte aus dem gewünschten Werkstoff versehen werden. Der gewünschte Werkstoff kann beispielsweise Aluminium sein. Die offenen Seitenflächen können auch zur Abdeckung mit einer Abdeckungsplatte aus einem geeigneten handelsüblichen Kunststoff versehen werden. Als Kunststoffe eignen sich hierfür beispielsweise UV-stabilisiertes Polypropen (PP), UV-stabilisiertes Polyethen (PE), Polyvinylchlorid (PVC) oder Acrylnitril-Butadien-Styrol-Copolymer (ABS). Die Abdeckungsplatte aus dem gewünschten Werkstoff besitzt in einer beispielhaften Ausführungsform eine Dicke von 0,40 mm bis 1,00 mm. Die Abdeckungsplatte aus Kunststoff besitzt in einer beispielhaften Ausführungsform eine Dicke von 1,0 mm bis 2,0 mm. Die Abdeckungsplatte aus Kunststoff kann wie auch die Abdeckungsplatte aus dem gewünschten Werkstoff mit einer Klebeschicht aus einem der genannten Klebstoffe auf dem Polyurethanstück verklebt werden. Bevorzugt wird hierzu ein 1K-PUR-Prepolymer mit einem Epoxid-Haftgrund verwendet. Durch die Abdeckung ergibt sich an der offenen Seitenfläche durch die Abdeckungsplatte eine Stoßkante.

Beansprucht wird schließlich auch ein Möbelstück, welches aus einem oder mehreren der oben beschriebenen Formteile hergestellt wird.

Die Erfindung besitzt den Vorteil, mechanisch stabile Formteile zum Bau von Möbelstücken zur Verfügung zu stellen. Diese Möbelstücke zeichnen sich außerdem bedingt durch diese Formteile durch ein geringes spezifisches Gewicht und dadurch eine gute Tragbarkeit und durch eine gute Oberflächenbeständigkeit und ein visuell ansprechendes Erscheinungsbild aus. Die Formteile weisen eine erhöhte Stabilität gegenüber den Fomteilen aus dem Stand der Technik auf, so dass diese das sichere Einbohren von Schraubgewinden erlauben.

Die Erfindung wird im Folgenden durch einundzwanzig Zeichnungen genauer beschrieben, wobei diese Zeichnungen nur Ausführungsformen der Erfindung darstellen und die Erfindung nicht auf diese Ausführungsformen beschränkt ist.

Die Zeichnung FIG.1 zeigt das Formteil mit den einzelnen Schichten in nicht zusammengesetzter Form in schräg frontaler Ansicht. Die Zeichnung FIG.2 zeigt das Formteil mit den einzelnen Schichten in seitlicher Ansicht. Die Zeichnung FIG.3 zeigt ein Formteil mit einer Schraube in einem eingefrästen Hohlraum in seitlicher Ansicht. Die Zeichnung FIG.4 zeigt ein Formteil mit einer Befestigungsmutter über dem eingefrästen Hohlraum in frontaler Ansicht. Die Zeichnung FIG. 5 zeigt ein lose zusammengesetztes Formteil mit eingefrästen Hohlräumen in schräg seitlicher Ansicht. Die Zeichnung FIG.6 zeigt eine Schraube zum Einsetzen in einen eingefrästen Hohlraum. Die Zeichnung FIG.7 zeigt ein fest zusammengesetztes Formteil mit der Schraube in den eingefrästen Hohlräumen in schräg seitlicher Ansicht. Die Zeichnung FIG.8 zeigt zwei mit Schrauben zusammengesetzte Formteile in seitlicher Ansicht. Die Zeichnung FIG.9 zeigt ein Formteil mit einem aufgesetzten und befestigten Gegenstand in seitlicher Ansicht. Die Zeichnung FIG.10 zeigt ein Formteil, auf das mit einer speziellen Schraube ein Gegenstand aufgeschraubt ist, in seitlicher Ansicht. Die Zeichnung FIG.11 zeigt ein Formteil, auf das mit einer speziellen Schraube mit einem speziellen Drehkopf ein Gegenstand aufgeschraubt ist, in seitlicher Ansicht. Die Zeichnung FIG.12 zeigt ein Formteil mit eingefrästen Hohlräumen und einer Dübel-Spreiz-Verbindung in seitlicher Ansicht. Die Zeichnung FIG.13 zeigt zwei mit einem Dübel zusammengesetzte Formteile in seitlicher Ansicht. Die Zeichnung FIG.14 zeigt zwei mit einem Doppel-Einschlagdübel zusammengesetzte Formteile in seitlicher Ansicht. Die Zeichnung FIG.15 zeigt zwei mit einer Spreizschraube zusammengesetzte Formteile in seitlicher Ansicht. Die Zeichnung FIG.16 zeigt zwei mit einer unsichtbaren Steckverbindung an den Schmalseiten zusammengesetzte Formteile in seitlicher Ansicht. Die Zeichnung FIG.17 zeigt zwei mit einer unsichtbaren Steckverbindung an den Breitseiten zusammengesetzte Formteile in seitlicher Ansicht. Die Zeichnung FIG.18 zeigt zwei mit einer Lamellofeder zusammengesetzte Formteile in seitlicher Ansicht. Die Zeichnung FIG.19 zeigt zwei mit einer Winkelfeder zusammengesetzte Formteile in seitlicher Ansicht. Die Zeichnung FIG.20 zeigt die Verwendung des Formteils zur Herstellung eines Möbelstücks von oben. Die Zeichnung FIG.21 zeigt die Verwendung des Formteils zur Herstellung eines Möbelstücks in schräg frontaler Ansicht.

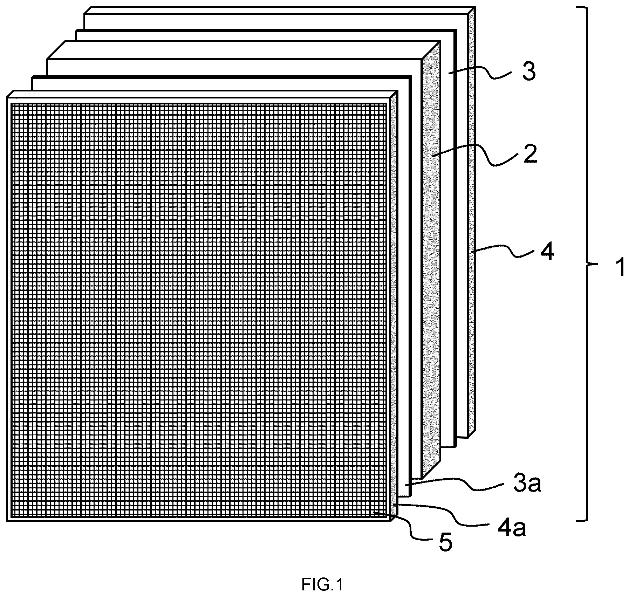

Die Zeichnung FIG.1 zeigt das Formteil (1) mit den einzelnen Schichten in nicht zusammengesetzter Form in schräg frontaler Ansicht. Zu sehen sind die einzelnen Schichten, welche zusammengesetzt werden und dadurch das Formteil (1) bilden. Innerste Schicht ist die Innenschicht, welche durch das Polyurethanstück (2) gebildet wird. Das Polyurethanstück (2) wird durch Häckseln eines Polyurethanschaums in einem Häcksler zu Polyurethanschnipseln, Beigabe eines Bindemittels zu den Polyurethanschnipseln, Beigabe von Aluminiumteilchen des Gewichts von 0,0005 bis 2,00 g, Vermischen zu einem Gemisch und Verpressen des dabei erhaltenen Gemisches zu einem Polyurethanstück (2) erhalten. Die nächste Schicht ausgehend von dem Polyurethanstück (2) in geradliniger Durchsicht ist die Klebeschicht (3). Die Klebeschicht (3) ist mit einer Auftragsmenge von 40 bis 600 g/m² auf das Polyurethanstück (2) aufgetragen. Die nächste Schicht ist die Außenschicht (4), welche durch eine Aluminiumplatte gebildet wird. Zu sehen sind hier auch die zweite Klebeschicht (3a), und die zweite Außenschicht (4a) als weitere Außenschicht (4), welche in geradliniger Durchsicht auf der anderen Seite der Innenschicht aufgebracht sind. Die letzte Schicht ist in dieser Ausführungsform dann die äußerste Schicht, welche durch eine Polyester-Lackierung (5) auf der zweiten Außenschicht (4a) gebildet wird. Auch die erste Außenschicht (4) kann auf der hier nicht sichtbaren Oberfläche eine Polyester-Lackierung (5) aufweisen. Dadurch werden die Oberflächen der Außenschichten (4,4a) geschützt und ein angenehmer Griff erzeugt.

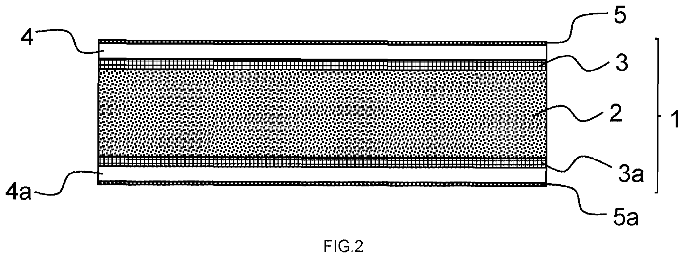

Die Zeichnung FIG.2 zeigt das Formteil (**1**) mit den einzelnen Schichten in seitlicher Ansicht. Die einzelnen Schichten sind hier zu dem fertigen Formteil (**1**) zusammengesetzt. Zu sehen sind die Innenschicht, die durch das Polyurethanstück (**2**) gebildet wird, die Klebeschicht (**3**), die Außenschicht (**4**), welche durch die Aluminiumplatte gebildet wird, und die Polyester-Beschichtung (**5**), welche die äußerste Schicht bildet. Zu sehen sind hier auch die Klebeschicht (**3a**) auf der anderen Seite des Polyurethanstücks (**2**), und die Polyester-Lackierung (**5a**) in geradliniger Durchsicht auf der anderen Seite des Polyurethanstücks (**2**).

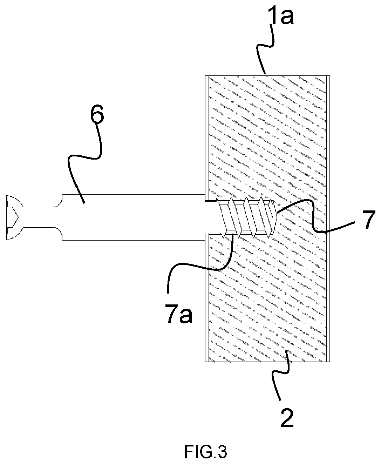

Die Zeichnung FIG.3 zeigt ein erstes Formteil (**1a**) mit einer Schraube (**6**) in einem eingefrästen Hohlraum (**7**) in seitlicher Ansicht. In das Formteil (**1**), welches aus den beschriebenen Schichten gebildet wird, wird ein Hohlraum (**7**) eingefräst. In den Hohlraum (**7**) wird eine Schraube (**6**) eingedreht. Dadurch enthält der eingefräste Hohlraum (**7**) ein Befestigungsmuster (**7a**) in Form eines Schraubgewindes. Das Polyurethanstück (**2**) weist eine genügende Festigkeit auf, um das Eindrehen einer Schraube (**6**) und das Eindrehen eines Befestigungsmusters (**7a**) durch die Schraube (**6**) zu ermöglichen. Das Schraubgewinde in dem ersten Formteil (**1a**) kann auch durch einen Bohrer eingedreht werden. Das Polyurethanstück (**2**) der Erfindung ermöglicht für diese Befestigungsart eine ausreichende Stabiltät.

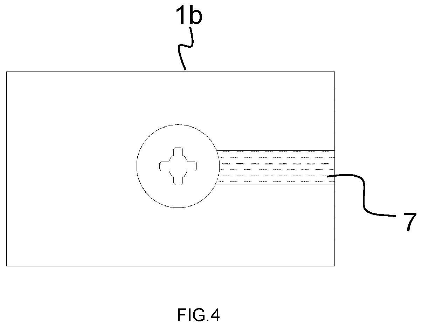

Die Zeichnung FIG.4 zeigt ein zweites Formteil (**1b**) mit einer Befestigungsmutter (**8**) über dem eingefrästen Hohlraum (**7**) in frontaler Ansicht. In das Formteil (**1**) ist ein Hohlraum (**7**) eingefräst. In diesen Hohlraum (**7**) ist eine Befestigungsmutter (**8**) eingebracht, indem der eingefräste Hohlraum (**7**) sich auch in Richtung der Befestigungsmutter (**8**) öffnet. Dieses zweite Formteil (**1b**) stellt das Gegenstück zur Befestigung des Formteils (**1**) aus der Zeichnung FIG.3 dar. Die Schraube (**6**) aus dem Formteil (**1**) des Gegenstücks wird in den eingefrästen Hohlraum (**7**) eingefügt. Die Befestigungsmutter (**8**) wird dann gedreht, so dass die Schraube (**6**) in dem eingefrästen Hohlraum (**7**) befestigt wird. Die beiden Formteile (**1a,1b**) können dadurch gegeneinander befestigt werden. Das Polyurethanstück (**2**) der Erfindung, in dieser Abbildung nicht zu sehen, ermöglicht für diese Befestigungsart eine ausreichende Stabiltät.

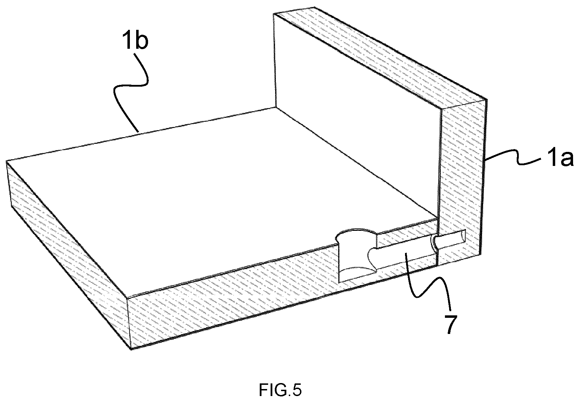

Die Zeichnung FIG.5 zeigt zwei lose zusammengesetzte Formteile (**1a**,**1b**) mit eingefrästen Hohlräumen (**7**) in schräg seitlicher Ansicht. Die Hohlräume (**7**) sind für eine vorgesehene Schraube (**6**) und eine vorgesehene Befestigungsmutter (**8**) eingearbeitet. In dieser Zeichnung ist gut zu sehen, dass sich der eingefräste Hohlraum (**7**) zur vorgesehenen Befestigungsmutter (**8**) hin öffnet.

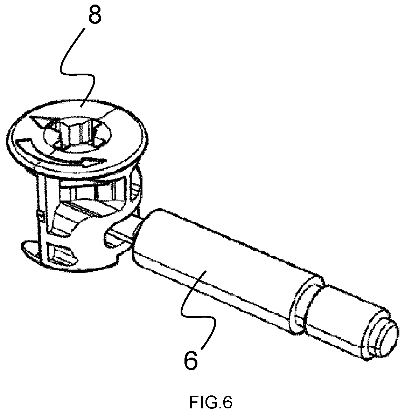

Die Zeichnung FIG.6 zeigt eine Schraube (**6**) aus dem Stand der Technik zum Einsetzen in einen eingefrästen Hohlraum (**7**). In dieser Ausführungsform besitzt die Schraube (**6**) kein Gewinde, sondern wird durch die Befestigungsmutter (**8**) befestigt.

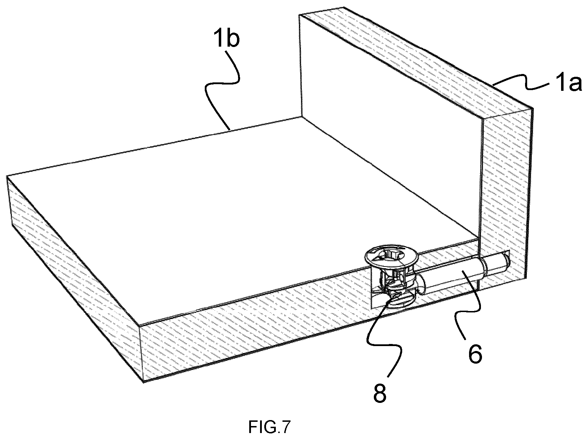

Die Zeichnung FIG.7 zeigt zwei fest zusammengesetzte Formteile (**1a**,**1b**) mit der Schraube (**6**) in den eingefrästen Hohlräumen (**7**) in schräg seitlicher Ansicht. Die Stabilität des Polyurethanstücks (**2**) ermöglicht das stabile Eindrehen der Schraube (**6**) und der Befestigungsmutter (**8**).

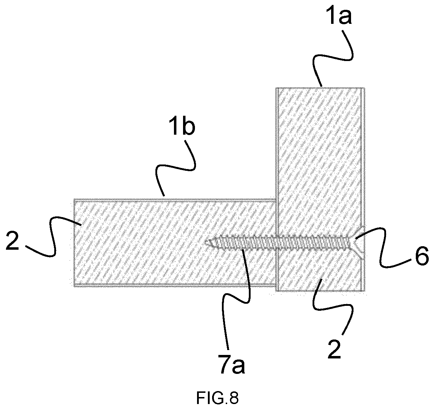

Die Zeichnung FIG.8 zeigt zwei mit Schrauben (**6**) zusammengesetzte Formteile (**1**) in seitlicher Ansicht. Zu sehen sind zwei Formteile (**1a**,**1b**), die durch eine Schraube (**6**) zusammengefügt sind. In dieser Ausführungsform besitzen die Schrauben (**6**) ein Gewinde. Die Formteile (**1a,1b**) mit dem Polyurethanstück (**2**) bieten eine genügende Stabilität und Festigkeit, um durch die Schraube (**6**) das erste Formteil (**1a**) und das zweite Formteil (**1b**) gegeneinander zu befestigen. Es ist möglich, die Schraube (**6**) zur Befestigung in die Formteile (**1a**,**1b**) ohne weitere Vorbehandlung einzudrehen. Dadurch wird beim Eindrehen ein Schraubgewinde als Befestigungsmuster (**7a**) erzeugt. Bevorzugt wird jedoch der Hohlraum (**7**) eingefräst und bei der Einfräsung ein Befestigungsmuster (**7a**) eingefräst.

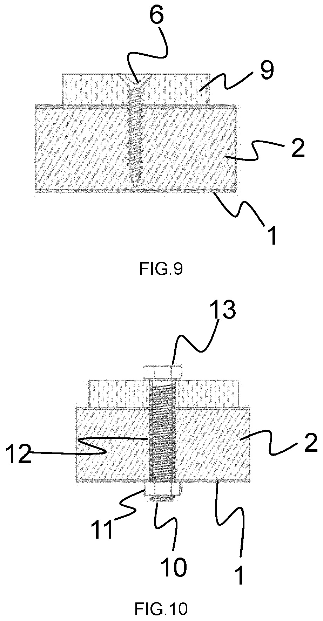

Die Zeichnung FIG.9 zeigt ein Formteil (**1**) mit einem aufgesetzten und befestigten Gegenstand in seitlicher Ansicht. Zu sehen ist ein Formteil (**1**) mit einem aufgeschraubten Gegenstand (**9**). Das Polyurethanstück (**2**) verleiht dem Formteil (**1**) eine genügende Stabilität, um eine Schraube (**6**) einzudrehen und den Gegenstand (**9**) durch die Schraube (**6**) auf dem Formteil (**1**) zu befestigen.

Die Zeichnung FIG.10 zeigt ein Formteil (**1**), auf das mit einer speziellen Schraube (**10**) aus dem Stand der Technik ein Gegenstand (**9**) aufgeschraubt ist, in seitlicher Ansicht. Zu sehen ist ein Formteil (**1**), auf das mit einer speziellen Schraube (**10**) mit einer Schraubmutter (**11**) ein Gegenstand (**9**) aufgeschraubt ist. Die spezielle Schraube (**10**) besitzt einen Drehkopf (**13**) und ein Schraubengewinde (**12**), welches mit einer Schraubmutter (**11**) in dem eingefrästen Hohlraum (**7**) befestigt wird. Die Stabilität des Polyurethanstücks (**2**) ermöglicht das stabile Eindrehen der speziellen Schraube (**10**).

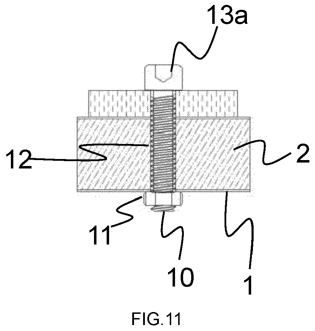

Die Zeichnung FIG.11 zeigt ein Formteil (**1**), auf das mit einer speziellen Schraube (**10**) mit einem speziellen Drehkopf ein Gegenstand (**9**) aufgeschraubt ist, in seitlicher Ansicht. Zu sehen ist ein Formteil (**1**), auf das mit einer speziellen Schraube (**10**) mit einem speziellen Drehkopf (**13a**) ein Gegenstand (**9**) aufgeschraubt ist, in seitlicher Ansicht. Die spezielle Schraube (**10**) besitzt einen speziellen Drehkopf (**13a**), der mit einem Inbusschlüssel drehbar ist. Auch diese spezielle Schraube (**10**) mit dem speziellen Drehkopf (**13a**) besitzt ein Schraubengewinde (**12**), welches mit einer Schraubmutter (**11**) in dem eingefrästen Hohlraum (**7**) befestigt wird. Die Stabilität des Polyurethanstücks (**2**) ermöglicht das stabile Eindrehen der speziellen Schraube (**10**).

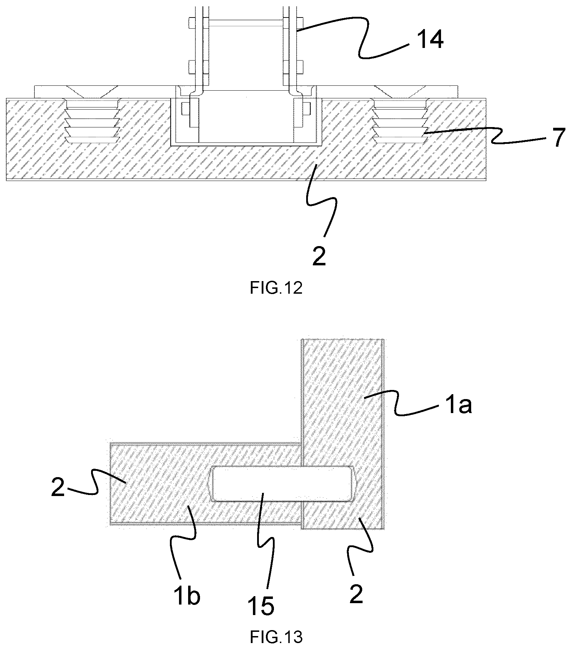

Die Zeichnung FIG.12 zeigt ein Formteil (**1**) mit eingefrästen Hohlräumen (**7**) und einer Dübel-Spreiz-Verbindung (**14**) in seitlicher Ansicht. Die Dübel-Spreizverbindung (**14**) ist in die eingefrästen Hohlräume (**7**) eingelassen und wird zur Befestigung gespreizt. Diese Befestigungsart ist möglich, weil das Polyurethanstück (**2**) eine erhöhte Stabilität besitzt.

Die Zeichnung FIG.13 zeigt zwei mit einem Dübel (**15**) zusammengesetzte Formteile (**1a,1b**) in seitlicher Ansicht. Der Dübel (**15**) wird in ein Formteil (**1a,1b**) eingeschlagen und die Formteile (**1a,1b**) werden durch Pressdruck gegeneinander befestigt. Auch diese Befestigungsart ist nur möglich, weil die Polyurethanstücke (**2**) eine erhöhte Stabilität besitzen.

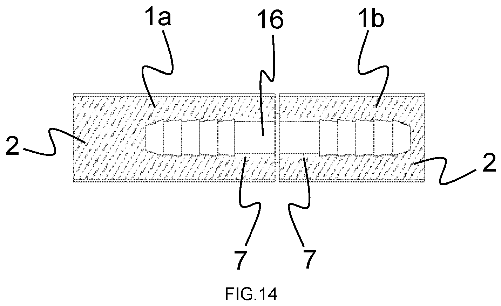

Die Zeichnung FIG.14 zeigt zwei mit einem Doppel-Einschlagdübel (**16**) zusammengesetzte Formteile (**1a,1b**) in seitlicher Ansicht. Zwei Formteile (**1a,1b**) sind hier mit einem sogenannten Doppeleinschlagdübel (**16**) gegeneinander befestigt. Dieser Doppeleinschlagdübel (**16**) wird zunächst in einem Formteil (**1a**) durch Einschlagen in den eingefrästen Hohlraum (**7**) befestigt und dann mit dem Formteil (**1a**) in den eingefrästen Hohlraum (**7**) des anderen Formteils (**1b**) eingepresst. Dadurch werden die beiden Formteile (**1a,1b**) gegeneinander befestigt. Diese Befestigungsart ist nur möglich, weil das Polyurethanstück (**2**) eine erhöhte Stabilität besitzt.

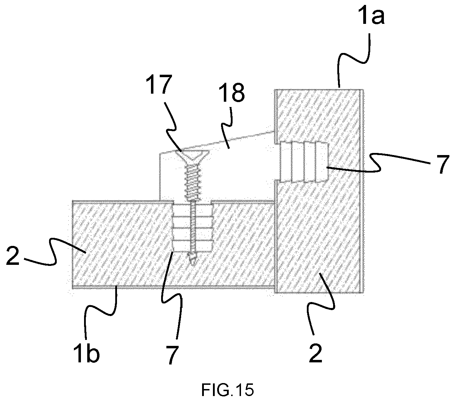

Die Zeichnung FIG.15 zeigt zwei mit einer Spreizschraube (**17**) zusammengesetzte Formteile (**1a,1b**) in seitlicher Ansicht. Eine Spreizschraube (**17**) drückt einen Eckbeschlag (**18**) gegen die eingefrästen Hohlräume zweier Formteile (**1a,1b**). Diese werden dadurch fest zusammengedrückt.

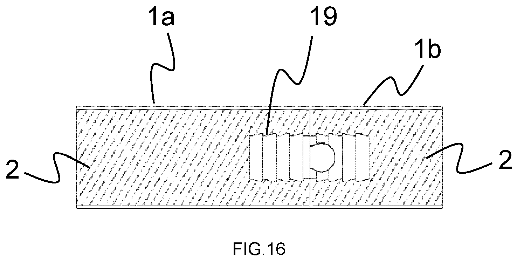

Die Zeichnung FIG.16 zeigt zwei mit einer unsichtbaren Steckverbindung (**19**) an den Schmalseiten zusammengesetzte Formteile (**1a,1b**) in seitlicher Ansicht. Die unsichtbare Steckverbindung (**19**) wird in die eingefrästen Hohlräume (**7**) eines Formteils (**1a**) gedrückt und dann in den eingefrästen Hohlraum (**7**) des anderen Formteils (**1b**) gedrückt. Diese Verbindung ist etwas weniger stabil als eine Verbindung mit einem Doppel-Einschlagdübel (**16**), ist jedoch zur losen Befestigung geeignet.

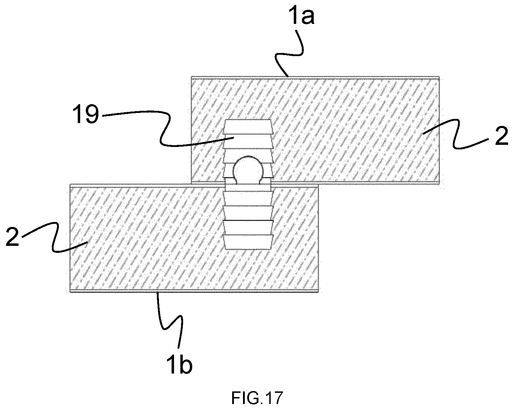

Die Zeichnung FIG.17 zeigt zwei mit einer unsichtbaren Steckverbindung (**19**) an den Breitseiten zusammengesetzte Formteile (**1a,1b**) in seitlicher Ansicht. Diese Befestigung wird genauso durchgeführt wie in der Befestigung in der Zeichnung FIG.16, wobei hier die Formteile (**1a**,**1b**) seitlich gegeneinander befestigt sind.

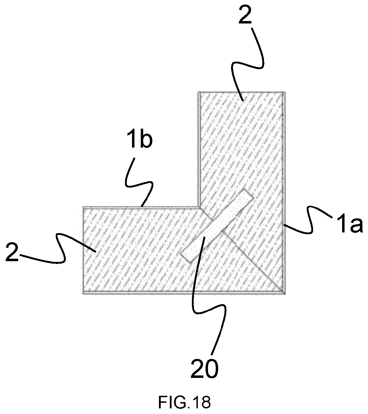

Die Zeichnung FIG.18 zeigt zwei mit einer Lamellofeder (**20**) zusammengesetzte Formteile **(1a,1b)** in seitlicher Ansicht. Zu sehen sind zwei gewinkelte Formteile (**1a,1b**), die durch eine Lamellofeder (**20**) gegeneinander befestigt sind. Lamellofedern (**20**) eignen sich zum Zusammensetzen von gewinkelten Formteilen (**1a,1b**). Die Lamellofeder (**20**) wird in einen eingefrästen Hohlraum (**7**) des ersten Formteils (**1a**) gesetzt und dann mit dem ersten Formteil (**1a**) in den eingefrästen Hohlraum (**7**) des anderen Formteils (**1b**) gedrückt. Durch die erhöhte Stabilität des Polyurethanstücke (**2**) der beiden Formteile (**1a,1b**) ist diese Befestigungsart möglich.

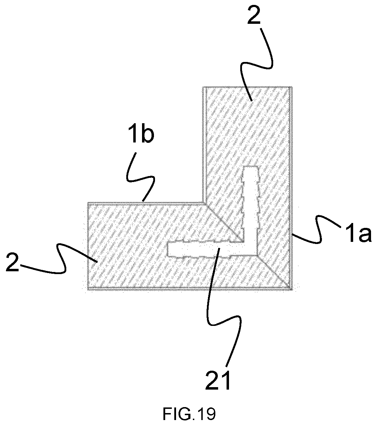

Die Zeichnung FIG.19 zeigt zwei mit einer Winkelfeder (**21**) zusammengesetzte Formteile (**1a,1b**) in seitlicher Ansicht. Die beiden Formteile (**1a**,**1b**) werden in gleicher Weise wie mit einer Lamellofeder (**20**) gegeneinander befestigt, wobei die Lamellofeder (**20**) gegen eine Winkelfeder (**21**) ersetzt ist.

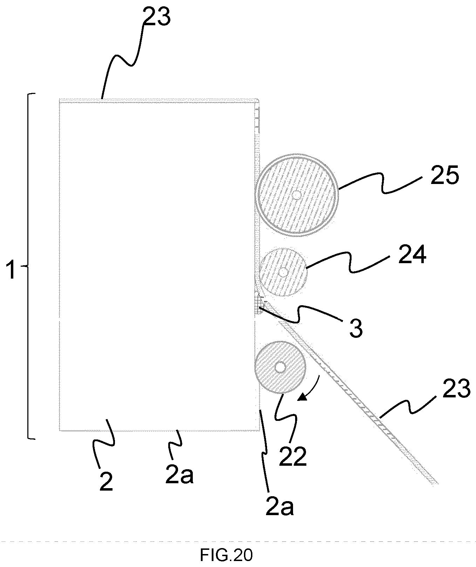

Die Zeichnung FIG.20 zeigt die Verwendung des Formteils (**1**) zur Herstellung eines Möbelstücks von oben. Zu sehen ist die Außenschicht (**4**) des Formteils (**1**) von oben. Das Polyurethanstück (hier nicht zu sehen) wird an den offenen Seitenflächen (**2a**) des Polyurethanstücks (**2**) zunächst mit einer Vorfräse (**22**) glattgeschliffen. Die Vorfräse (**22**) ist mit einer Schleiffläche ausgestattet und dreht sich in Pfeilrichtung. Dabei kommt sie an der Schleiffläche mit der offenen Seitenfläche (**2a**) des Polyurethanstücks (**2**) in Berührung, wobei die offene Seitenfläche (**2a**) glattgeschliffen wird. Nach dem Durchlaufen der Vorfräse (**22**) wird, beispielsweise durch einen Kalander, eine Klebeschicht (**3**) auf die offene Seitenfläche (**2a**) des Polyurethanstücks (**2**) aufgetragen. Die Klebeschicht (**3**) wird vor dem Verkleben durch Erhitzen, beispielwiese mit einem Laser, mit Heißluft oder durch nahe Infrarotstrahlung (NIR), auf die zur Verklebung erforderliche Temperatur erhitzt. Auf die Klebeschicht (**3**) wird dann eine Abdeckungsplatte (**23**) zur Abdeckung aus Aluminium oder Kunststoff aus UV-stabilisiertem Polypropen (PP), UV-stabilisiertem Polyethen (PE), Polyvinylchlorid (PVC) oder Acrylnitril-Butadien-Styrol-Copolymer (ABS) aufgetragen. Die Abdeckungsplatte (**23**) aus Kunststoff besitzt in einer beispielhaften Ausführungsform eine Dicke von 1,0 mm bis 2,0 mm. Das Auftragen der Abdeckungsplatte (**23**) erfolgt durch eine Walze (**24**). Nach dem Auftragen der Abdeckungsplatte (**23**) wird die entstandene Stoßkante der Abdeckungsplatte (**23**) mit einer Formfräse (**25**) glattpoliert.

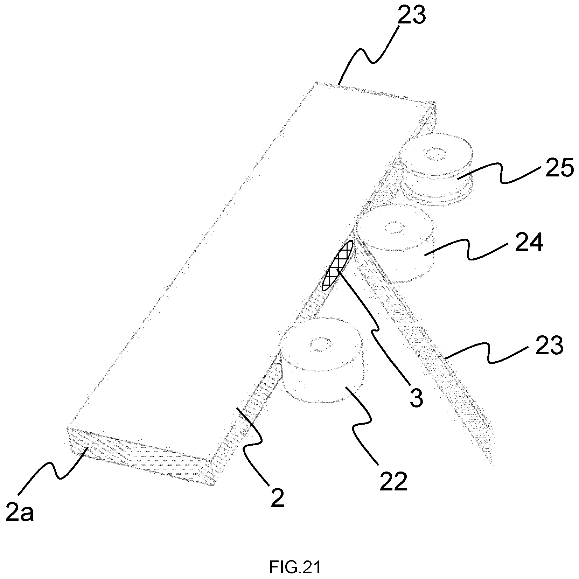

Die Zeichnung FIG.21 zeigt die Verwendung des Formteils (**1**) zur Herstellung eines Möbelstücks in schräg frontaler Ansicht. Zu sehen sind das Polyurethanstück (**2**) und die Außenschicht (**4**). Nach dem über die offene Seitenfläche (**2a**) des Polyurethanstücks (**2**) eine Vorfräse (**22**) gelaufen ist, wird eine Klebeschicht (**3**) aufgetragen. Danach wird eine Abdeckungsplatte (**23**) aufgetragen. Die Abdeckungsplatte (**23**) wird mit einer Walze (**24**) auf die Klebeschicht (**3**) aufgetragen. Dadurch entsteht eine Stoßkante. Hinter der Walze (**24**) läuft noch eine Formfräse (**25**) über die Abdeckungsplatte (**23**), damit diese ein glatte Oberfläche erhält. Nach dieser Prozedur kann das Formteil (**1**) zur weiteren Herstellung eines Möbelstücks verwendet werden.

### Bezugszeichenliste

- 1: Formteil
- 1a: Erstes Formteil
- 1b: Zweites Formteil
- 2: Polyurethanstück
- 2a: Offene Seitenfläche
- 3: Klebeschicht
- 3a: Klebeschicht auf der anderen Seite des Polyurethanstücks
- 4: Außenschicht
- 4a: Zweite Außenschicht
- 5: Polyester-Lackierung
- 5a: Polyester-Lackierung auf der anderen Seite des Polyurethanstücks
- 6: Schraube
- 7: Eingefräster Hohlraum
- 7a: Befestigungsmuster
- 8: Befestigungsmutter
- 9: Gegenstand
- 10: Spezielle Schraube
- 11: Schraubmutter
- 12: Schraubengewinde
- 13: Drehkopf
- 13a: Spezieller Drehkopf
- 14: Dübel-Spreiz-Verbindung
- 15: Dübel
- 16: Doppel-Einschlagdübel
- 17: Spreizschraube
- 18: Eckbeschlag
- 19: Unsichtbare Steckverbindung
- 20: Lamellofeder
- 21: Winkelfeder
- 22: Vorfräse
- 23: Abdeckungsplatte
- 24: Walze
- 25: Formfräse

## Patentansprüche

1. Formteil (1) zur Herstellung von Möbeln, umfassend
• eine Innenschicht, bestehend aus einem Polyurethanstück (2), und
• zwei Außenschichten (4,4a), und
• zwischen den Außenschichten (4,4a) und der Innenschicht jeweils eine Klebeschicht (3), mit einer weiteren Klebeschicht (3a) auf der anderen Seite des Polyurethanstücks (2),
**dadurch gekennzeichnet, dass**
• das Polyurethanstück (2) der Innenschicht aus gehäckselten und verpressten Polyurethanmaterialschnipseln gemischt mit Aluminiumteilchen und einem Bindemittel besteht und eine Dichte von 400 - 700 kg/m³ besitzt, und
• die Außenschichten (4,4a) eine Schichtdicke von 0,10 - 4,00 mm aufweisen, und
• die Aluminiumteilchen ein Gewicht von 0,0005 bis 2,00 g aufweisen, und
• die Klebeschichten (3,3a) eine Auftragsmenge von 40 bis 600 g/m² besitzen.

2. Formteil (1) gemäß Anspruch 1, **dadurch gekennzeichnet, dass** die Außenschichten (4) aus Aluminium oder aus Steinfurnier bestehen.

3. Formteil (1) gemäß Anspruch 1, **dadurch gekennzeichnet, dass** das Material, aus dem die Außenschichten (4) bestehen, aus hochdruckgepresstem Laminat, kontinuierlich gepresstem Laminat, Carbonfaser, durch Harz gebundene Textilien, Beton, mineralisch gebundenen Materialien, keramischen Materialien, Gläsern, Metallen, witterungsbeständigen Kunststoffen oder Edelhölzern ausgewählt wird.

4. Formteil (1) gemäß einem der Ansprüche 1 bis 3, **dadurch gekennzeichnet, dass** die Aluminiumteilchen Aluminiumschnipsel eines Gewichts von 0,001 bis 0,5 g sind.

5. Formteil (1) gemäß einem der Ansprüche 1 bis 4, **dadurch gekennzeichnet, dass** die Klebeschichten (3) aus einem 1K-PUR-Prepolymer bestehen.

6. Formteil (1) gemäß einem der Ansprüche 1 bis 4, **dadurch gekennzeichnet, dass** die Klebeschichten (3) aus einem Acrylatkleber, aus einem im Ausgangszustand lösungsmittelhaltigen Klebstoff, einem Dispersionsklebstoff, oder aus einem Zweikomponenten-Klebstoff aufgebaut sind.

7. Formteil (1) gemäß einem der Ansprüche 1 bis 6, **dadurch gekennzeichnet, dass** dieses planar ist und die Form einer Platte aufweist.

8. Formteil (1) gemäß einem der Ansprüche 1 bis 7, **dadurch gekennzeichnet, dass** das Polyurethanstück (2) der Innenschicht eine Dichte von 550 - 660 kg/m³ aufweist.

9. Formteil (1) gemäß einem der Ansprüche 1 bis 8, **dadurch gekennzeichnet, dass** die Außenschichten (4) mit einer Polyester-Lackierung mit einer Schichtdicke von 10 - 25 µm als äußerster Schicht lackiert sind.

10. Verfahren zur Herstellung eines Formteils (1) gemäß einem der Ansprüche 1 bis 9, umfassend die Verfahrensschritte
• Häckseln eines Polyurethanschaums in einem Häcksler zu Polyurethanschnipseln, und
• Beigabe eines Bindemittels zu den Polyurethanschnipseln und Vermischen, so dass sich ein Gemisch bildet, und Verpressen des dabei erhaltenen Gemisches zu einem Polyurethanstück (2), und
• Aufbringen einer Klebeschicht (3) auf mindestens eine Seite des Polyurethanstücks (2), und einer weiteren Klebeschicht (3a) auf der anderen Seite des Polyurethanstücks (2), und
• Aufpressen von Außenschichten (4,4a) der Schichtdicke von 0,10 - 4,00 mm auf die Seite des Polyurethanstücks (2), auf der die Klebeschichten (3,3a) aufgebracht sind,
**dadurch gekennzeichnet, dass**
• zu den Polyurethanschnipseln vor dem Verpressen Aluminiumteilchen eines Gewichts von 0,0005 bis 2,00 g zugegeben werden, und
• die Klebeschichten (3,3a) mit einer Auftragsmenge von 40 bis 600 g/m² auf der mindestens einen Seite des Polyurethanstücks (2) aufgebracht werden, und
• das Verpressen zu einem Polyurethanstück (2) mit einem solchen Druck und einer solchen Dauer vorgenommen wird, dass das Polyurethanstück (2) nach dem Verpressen eine Dichte von 400 - 700 kg/m³ besitzt.

11. Verfahren zur Herstellung eines Formteils (1) gemäß Anspruch 10, **dadurch gekennzeichnet, dass** als Außenschichten (4) ein Steinfurnier aufgepresst wird, wobei das Steinfurnier durch Auftragen eines Harzes auf Steinmaterial, Auftragen von Glasfasern auf das aufgetragene Harz und Abtragen der Glasfasern von Hand gewonnen wird und die abgetragenen Glasfasern mit dem Steinmaterial als Steinfurnier auf die Seite des Polyurethanstücks (2), auf der die Klebeschichten (3) aufgebracht sind, aufgepresst werden.

12. Verfahren zur Herstellung eines Formteils (1) gemäß einem der Ansprüche 10 oder 11, **dadurch gekennzeichnet, dass** das Material, aus dem die Außenschichten (4) bestehen, ausgewählt wird aus hochdruckgepresstem Laminat, kontinuierlich gepresstem Laminat, Carbonfaser, durch Harz gebundene Textilien, Beton, mineralisch gebundenen Materialien, keramischen Materialien, Gläsern, Metallen, witterungsbeständigen Kunststoffen oder Edelhölzern.

13. Verfahren zur Herstellung eines Formteils (1) gemäß Anspruch 12, **dadurch gekennzeichnet, dass** das hochdruckgepresste Laminat oder das kontinuierlich gepresste Laminat vor dem Aufpressen auf die Außenschichten (4) durch Eintränken von mindestens zwei Papierschichten in Melamin- oder Phenolharz hergestellt wird, wodurch aus dem Melamin- oder Phenolharz nach dem Aushärten ein duroplastischer Kunststoff entsteht, und dieser duroplastische Kunststoff auf die Seite des Polyurethanstücks (2), auf der die Klebeschichten (3) aufgebracht sind, als Außenschichten (4) aufgepresst wird.

14. Verfahren zur Herstellung eines Formteils (1) gemäß einem der Ansprüche 10 bis 13, **dadurch gekennzeichnet, dass** zur Herstellung der Klebeschichten (3) ein Acrylatkleber, ein im Ausgangszustand lösungsmittelhaltiger Klebstoff, welchen man zum Erhalt der Klebewirkung eintrocknen lässt, ein Dispersionsklebstoff, oder ein Zweikomponenten-Klebstoff auf die mindestens eine Seite des Polyurethanstücks (2) aufgetragen wird, oder die Klebeschichten (3) aus einem 1K-PUR-Prepolymer bestehen.

15. Verwendung eines Formteils (1) gemäß einem der Ansprüche 1 bis 9 zur Herstellung von Möbelstücken.

16. Verwendung eines Formteils (1) gemäß Anspruch 15, **dadurch gekennzeichnet, dass** die Herstellung des Möbelstücks durch Einbohren eines Schraubgewindes in das Formteil (1) und Verschrauben von mindestens zwei Formteilen (1) zu einem Möbelstück vorgenommen wird.

17. Möbelstück, hergestellt aus einem Formteil (1) gemäß einem der Ansprüche 1 bis 9.

## Claims

1. Shaped part (1) for the production of furniture, comprising
an inner layer that consists of a polyurethane piece (2), and
two outer layers (4, 4a), and
between the outer layers (4, 4a) and the inner layer respectively one adhesive layer (3), with a further adhesive layer (3a) on the other side of the polyurethane piece (2),
**characterized in that**
the polyurethane piece (2) of the inner layer consists of chopped and compressed shreds of polyurethane material, mixed with aluminum particles and a binder, and has a density of 400-700 kg/m³, and
the outer layers (4, 4a) have a layer thickness of 0.10-4.00 mm, and
the aluminum particles have a weight of 0.0005 to 2.00 g, and
the adhesive layers (3, 3a) have an application quantity of 40 to 600 g/m².

2. Shaped part (1) according to claim 1,
**characterized in that** the outer layers (4) are made of aluminum or of stone veneer.

3. Shaped part (1) according to claim 1,
**characterized in that** the material which the outer layers (4) consist of is selected from high-pressure pressed laminate, continuous-pressed laminate, carbon fiber, resin-bound textiles, concrete, mineral-bound materials, ceramic materials, glasses, metals, weathering-resistant synthetic materials or precious woods.

4. Shaped part (1) according to one of claims 1 to 3,
**characterized in that** the aluminum particles are aluminum shreds having a weight of 0.001 to 0.5 g.

5. Shaped part (1) according to one of claims 1 to 4,
**characterized in that** the adhesive layers (3) are made of a 1K-PUR prepolymer.

6. Shaped part (1) according to one of claims 1 to 4,
**characterized in that** the adhesive layers (3) are made of an acrylate adhesive, of an in its initial state solvent-containing adhesive, of a dispersion adhesive or of a two-component adhesive.

7. Shaped part (1) according to one of claims 1 to 6,
**characterized in that** the shaped part (1) is planar and has a panel shape.

8. Shaped part (1) according to one of claims 1 to 7,
**characterized in that** the polyurethane piece (2) of the inner layer has a density of 550-660 kg/m³.

9. Shaped part (1) according to one of claims 1 to 8,
**characterized in that** the outer layers (4) are varnished with a polyester varnishing, having a layer thickness of 10-25 µm, as the outermost layer.

10. Method for the production of a shaped part (1) according to one of claims 1 to 9, comprising the method steps of
chopping a polyurethane foam in a chopper to produce polyurethane shreds, and adding a binder to the polyurethane shreds and mixing, resulting in a mixture, and compressing the resulting mixture to form a polyurethane piece (2), and
applying an adhesive layer (3) onto at least one side of the polyurethane piece (2), and a further adhesive layer (3a) onto the other side of the polyurethane piece (2), and
pressing outer layers (4, 4a), having a layer thickness of 0.10-4.00 mm, onto the side of the polyurethane piece (2) on which the adhesive layers (3, 3a) have been applied,
**characterized in that**
aluminum particles, having a weight of 0.0005 to 2.00 g, are added to the polyurethane shreds before the compression, and
the adhesive layers (3, 3a) are applied with an application quantity of 40 g/m² to 600 g/m² onto the at least one side of the polyurethane piece (2), and
the compression for forming a polyurethane piece (2) is carried out with such a pressure and for such a duration that after the compression the polyurethane piece (2) has a density of 400-700 kg/m³.

11. Method for the production of a shaped part (1) according to claim 10,
**characterized in that** a stone veneer is pressed on as outer layers (4), wherein the stone veneer is obtained by applying a resin onto stone material, applying glass fibers onto the applied resin and removing the glass fibers by hand, and the removed glass fibers with the stone material are pressed on as a stone veneer onto the side of the polyurethane piece (2) which the adhesive layers (3) have been applied onto.

12. Method for the production of a shaped part (1) according to one of claims 10 or 11, **characterized in that** the material which the outer layers (4) consist of is selected from high-pressure pressed laminate, continuous-pressed laminate, carbon fiber, resin-bound textiles, concrete, mineral-bound materials, ceramic materials, glasses, metals, weathering-resistant synthetic materials or precious woods.

13. Method for the production of a shaped part (1) according to claim 12, **characterized in that** the high-pressure pressed laminate or the continuous-pressed laminate is produced, before it is pressed onto the outer layers (4), by impregnating at least two paper layers with melamine resin or phenolic resin, as a result of which a thermosetting synthetic material is created from the melamine resin or phenolic resin after curing, and this thermosetting synthetic material is pressed as outer layers (4) onto the side of the polyurethane piece (2) which the adhesive layers (3) have been applied onto.

14. Method for the production of a shaped part (1) according to one of claims 10 to 13, **characterized in that** in order to produce the adhesive layers (3), an acrylate adhesive, an in its initial state solvent-containing adhesive, which is allowed to dry in order to obtain the adhesive effect, a dispersion adhesive or a two-component adhesive is applied onto the at least one side of the polyurethane piece (2), or the adhesive layers (3) are made of a 1K-PUR prepolymer.

15. Use of a shaped part (1) according to one of claims 1 to 9 for the production of pieces of furniture.

16. Use of a shaped part (1) according to claim 15,
**characterized in that** the production of the piece of furniture is carried out by drilling a screw thread into the shaped part (1) and screwing at least two shaped parts (1) with each other to form a piece of furniture.

17. Piece of furniture,
produced from a shaped part (1) according to one of claims 1 to 9.

## Revendications

1. Pièce moulée (1) pour la fabrication de meubles, comprenant
• une couche intérieure, constituée d'une pièce en polyuréthane (2), et
• deux couches extérieures (4, 4a), et
• entre les couches extérieures (4, 4a) et la couche intérieure respectivement une couche adhésive (3), avec une autre couche adhésive (3a) sur l'autre côté de la pièce en polyuréthane (2),
**caractérisée en ce que**
• la pièce en polyuréthane (2) de la couche intérieure est constituée de copeaux de matériau de polyuréthane hachés et pressés, mélangés avec des particules d'aluminium et un liant, et possède une densité de 400 kg/m³ à 700 kg/m³, et
les couches extérieures (4, 4a) ont une épaisseur de couche de 0,10 mm à 4,00 mm, et
• les particules d'aluminium ont un poids de 0,0005 g à 2,00 g, et
• les couches adhésives (3, 3a) possèdent une quantité appliquée de 40 g/m² à 600 g/m².

2. Pièce moulée (1) selon la revendication 1,
**caractérisée en ce que** les couches extérieures (4) sont constituées d'aluminium ou de placage de pierre.

3. Pièce moulée (1) selon la revendication 1,
**caractérisée en ce que** le matériau dont sont constituées les couches extérieures (4) est choisi parmi un stratifié haute pression, un stratifié pressé en continu, de la fibre de carbone, des textiles liés par de la résine, du béton, des matériaux liés en minéraux, des matériaux céramiques, des verres, des métaux, des matières plastiques résistantes aux intempéries ou des bois précieux.

4. Pièce moulée (1) selon l'une des revendications 1 à 3,
**caractérisée en ce que** les particules d'aluminium sont des copeaux d'aluminium d'un poids de 0,001 g à 0,5 g.

5. Pièce moulée (1) selon l'une des revendications 1 à 4,
**caractérisée en ce que** les couches adhésives (3) sont constituées d'un prépolymère de PUR 1K.

6. Pièce moulée (1) selon l'une des revendications 1 à 4,
**caractérisée en ce que** les couches adhésives (3) sont constituées d'une colle à acrylate, d'une colle contenant un solvant en état initial, d'une colle à dispersion ou d'une colle à deux composants.

7. Pièce moulée (1) selon l'une des revendications 1 à 6,
**caractérisée en ce que** la pièce moulée (1) est plane et en forme d'une plaque.

8. Pièce moulée (1) selon l'une des revendications 1 à 7,
**caractérisée en ce que** la pièce en polyuréthane (2) de la couche intérieure a une densité de 550 kg/m³ à 660 kg/m³.

9. Pièce moulée (1) selon l'une des revendications 1 à 8,
**caractérisée en ce que** les couches extérieures (4) sont vernies avec un laquage de polyester ayant une épaisseur de couche de 10 µm à 25 µm en tant que couche la plus extérieure.

10. Procédé de fabrication d'une pièce moulée (1) selon l'une des revendications 1 à 9, comprenant les étapes de procédé
• hachage d'une mousse de polyuréthane en copeaux de polyuréthane dans un hacheur, et
• ajout d'un liant aux copeaux de polyuréthane et mélange, de sorte qu'un mélange se forme, et pressage du mélange ainsi obtenu pour former une pièce en polyuréthane (2), et
• application d'une couche adhésive (3) sur au moins un côté de la pièce en polyuréthane (2), et d'une autre couche adhésive (3a) sur l'autre côté de la pièce en polyuréthane (2), et
• pressage de couches extérieures (4, 4a) de l'épaisseur de couche de 0,10 mm à 4,00 mm sur le côté de la pièce en polyuréthane (2) sur lequel les couches adhésives (3, 3a) sont appliquées,
**caractérisé en ce que**
• des particules d'aluminium d'un poids de 0,0005 g à 2,00 g sont ajoutées aux copeaux de polyuréthane avant le pressage, et
• les couches adhésives (3, 3a) sont appliquées avec une quantité appliquée de 40 g/m² à 600 g/m² sur l'au moins un côté de la pièce en polyuréthane (2), et
• le pressage pour former une pièce en polyuréthane (2) est effectué avec une pression et une durée telles que la pièce en polyuréthane (2) possède une densité de 400 kg/m³ à 700 kg/m³ après le pressage.

11. Procédé de fabrication d'une pièce moulée (1) selon la revendication 10, **caractérisé en ce qu'**un placage de pierre est pressé en tant que couches extérieures (4), où le placage de pierre est obtenu par application d'une résine sur un matériau de pierre, application de fibres de verre sur la résine appliquée et enlèvement des fibres de verre à la main, et les fibres de verre enlevées sont pressées avec le matériau de pierre en tant que placage de pierre sur le côté de la pièce en polyuréthane (2) sur lequel les couches adhésives (3) sont appliquées.

12. Procédé de fabrication d'une pièce moulée (1) selon l'une des revendications 10 ou 11,
**caractérisé en ce que** le matériau dont sont constituées les couches extérieures (4) est choisi parmi un stratifié haute pression, un stratifié pressé en continu, de la fibre de carbone, des textiles liés par de la résine, du béton, des matériaux liés en minéraux, des matériaux céramiques, des verres, des métaux, des matières plastiques résistantes aux intempéries ou des bois précieux.

13. Procédé de fabrication d'une pièce moulée (1) selon la revendication 12, **caractérisé en ce que** le stratifié haute pression ou le stratifié pressé en continu est fabriqué avant le pressage sur les couches extérieures (4) par imprégnation d'au moins deux couches de papier dans de la résine de mélamine ou de la résine phénolique, ce qui permet qu'une matière plastique thermodurcissable se forme de la résine de mélamine ou de la résine phénolique après le durcissement, et cette matière plastique thermodurcissable est pressée en tant que couches extérieures (4) sur le côté de la pièce en polyuréthane (2) sur lequel les couches adhésives (3) sont appliquées.

14. Procédé de fabrication d'une pièce moulée (1) selon l'une des revendications 10 à 13,
**caractérisé en ce que** pour la fabrication des couches adhésives (3), une colle à acrylate, une colle contenant un solvant à l'état initial, que l'on laisse sécher pour obtenir l'effet adhésif, une colle à dispersion ou une colle à deux composants est appliquée sur l'au moins un côté de la pièce en polyuréthane (2), ou les couches adhésives (3) sont constituées d'un prépolymère de PUR 1K.

15. Utilisation d'une pièce moulée (1) selon l'une des revendications 1 à 9 pour la fabrication de meubles.

16. Utilisation d'une pièce moulée (1)selon la revendication 15, **caractérisée en ce que** la fabrication du meuble est réalisée par per 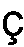 age d'un filet de vis dans la pièce moulée (1) et vissage d'au moins deux pièce moulées (1) l'une aveac l'autre pour produire un meuble.

17. Meuble fabriqué à partir d'une pièce moulée (1) selon l'une des revendications 1 à 9.
